# EUROPEAN PATENT SPECIFICATION

(11) **EP 0 595 653 B1**
(45) Date of publication and mention of the grant of the patent: **03.01.1996**
(21) Application number: 93308669.6
(22) Date of filing: 29.10.1993
(51) Int. Cl.: B60C 15/00

(54) **Pneumatic tyre**
Luftreifen
Bandage pneumatique

(30) Priority: 30.10.1992 JP 315683/92; 05.11.1992 JP 322635/92; 21.12.1992 JP 357034/92
(43) Date of publication of application: 04.05.1994
(73) Proprietor: SUMITOMO RUBBER INDUSTRIES LIMITED, Kobe-shi Hyogo-ken (JP)
(72) Inventor: Tamano, Akiyoshi, Akashi-shi, Hyogo-ken (JP); Sasaoka, Kiyonori, Nishi-Shirakawa-gun, Kukushima-ken (JP); Hayashi, Motoo, Akashi-shi, Hyogo-ken (JP); Suzuki, Kazuya, Shirakawa-shi, Fukushima-ken (JP); Hasegawa, Hirotsugu, Kakogawa-shi, Hyogo-ken (JP)
(74) Representative: Stewart, Charles Geoffrey

(56) References cited:
- EP-A- 0 395 039
- BE-A- 673 798
- FR-A- 1 124 766
- US-A- 5 111 865
- PATENT ABSTRACTS OF JAPAN vol. 15, no. 97 (M-1090)8 March 1991 & JP-A-02 310 110 (TOYO TIRE&RUBBER CO. LTD.) 25 December 1990

## Description

The present invention relates to a pneumatic tyre having an improved carcass structure with increased sidewall rigidity.

For high performance cars such as sports cars, the aspect ratio of the tyre is becoming lower and lower.

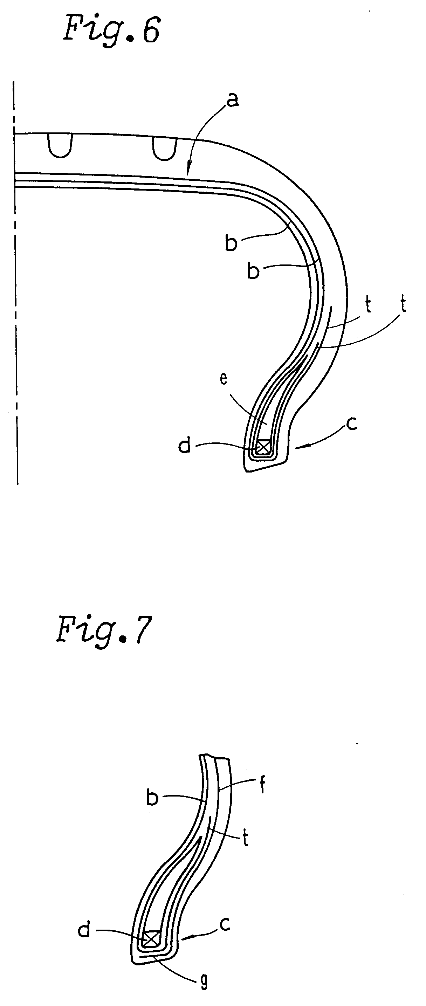

A conventional carcass structure widely used in such low aspect ratio tyres is shown in Figure 6 and comprises a carcass ply (b) extending between the bead portions (c) and turned up around bead cores (d) from the axially inside to the outside of the tyre.

In such a low aspect ratio tyre because the tyre height is relatively low and the running speed is high, the sidewall is required to have a high rigidity to meet severe service conditions.

In order to increase the sidewall rigidity, the number of carcass plies (b) is increased to two plies, and the height of each turned up portion (t) is increased, as shown in Fig.6.

In such a high turnup structure, however, it is difficult to increase the lateral, longitudinal and torsional rigidity of the tyre to improve the handling. Further, the width of the carcass ply material is increased and this increases tyre weight.

In order to solve the above-mentioned problems, another carcass structure shown in Fig.7 has been proposed, wherein the carcass consists of an inner carcass ply (b) turned up around a bead core (d) from the axially inside to the outside of the tyre, and an outer carcass ply (f) extending radially inwardly from the tread portion outside the inner carcass ply turned up portion (t) and turned axially inwards of the tyre under the bead core (d).

Accordingly, due to the inner and outer plies (b and f), a stiff shell structure is formed, and the lateral, longitudinal and torsional rigidity of the tyre can be effectively increased.

However, the manufacturing of such a tyre is difficult. As a result, not only is the production cost increased, but also the positioning of the edge (g) of the outer carcass ply (f) under the bead core (d) is difficult, and the force variations in the finished tyre are liable to be large which spoils high speed running stability.

It is therefore, an object of the present invention to provide a pneumatic tyre having an improved carcass structure, which has increased lateral, longitudinal and torsional rigidity to improve the handling without having increased carcass weight, and which can be easily manufactured without increasing force variations and production cost.

According to the present invention, a pneumatic tyre comprises a tread portion, a pair of axially spaced beads each with a bead core therein, a pair of sidewalls extending therebetween, a carcass having an inner carcass ply and an outer carcass ply, and a bead apex made of hard rubber disposed in each bead, said inner carcass ply extending between the beads and having a pair of edges turned up around the bead cores from the axially inside to the outside of the tyre to define two turned up portions and one main portion therebetween, each said turned up portion extending radially outwardly from the bead portion over the maximum tyre width point, said bead apex disposed between the main portion and each said turned up portion and tapering radially outwardly from the bead core, characterised by the outer carcass ply having a pair of edges each disposed between the bead apex and each said turned up portion, and the edges of the outer carcass ply being terminated radially outwards of the radially inner side of the bead core.

Accordingly, a shell structure is formed by the inner and outer carcass plies, within which the hard rubber bead apex is located. Therefore, the lateral, longitudinal and torsional rigidity of the tyre is effectively increased.

Further, as the outer carcass ply does not extend under the bead core, the edges thereof are not disturbed on tyre assembly and can thus be accurately and consistently positioned and so force variations are not increased. Further, the carcass weight is decreased in the tyres of the prior art such as that of Figures 6 and 7. Furthermore, manufacturing is easier than the tyres of Fig 7 and is retained at almost the same level as the Fig.6 carcass structure.

Embodiments of the present invention will now be described in detail in conjunction with the accompanying drawings, in which:
Figs.1 to 5 are cross sectional views each showing an embodiment of the present invention; and
Figs.6 and 7 are cross sectional views each showing a conventional carcass structure.

In the figures, a pneumatic tyre 1 comprises a tread portion 2 with a tread surface 2A, a pair of sidewalls 3 extending radially inwardly from the tread edges, and a pair of beads 4 each located at the radially inner end of each sidewall 3.

The tyre aspect ratio is not more than 60%.

The tyre 1 also comprises a pair of bead apexes 5 one disposed in each of the beads 4, a carcass 8 composed of an inner carcass ply 9 and an outer carcass ply 10, and a belt disposed radially outside the carcass and inside a rubber tread 19.

The rubber tread 19 is composed of a radially inner softer rubber layer 21 disposed on the belt 16 and a radially outer harder rubber layer 22 disposed thereon.

The JIS A hardness of the inner rubber layer 21 is in a low range of from 50 to 60 degrees to provide ride comfort, and the JIS A hardness of the outer rubber layer 22 is in a higher range of from 62 to 72 degrees to provide wear resistance.

The inner carcass ply 9 extends between the beads 4 through the tread portion 2 and the sidewalls 3 and is turned up around each bead core 5 from the inside to the outside of the tyre so as to form a pair of turned up portions 7 and a main portion.

Each of the turned up portions 7 extends radially outwardly from the bead 4 to above the maximum tyre width point B.

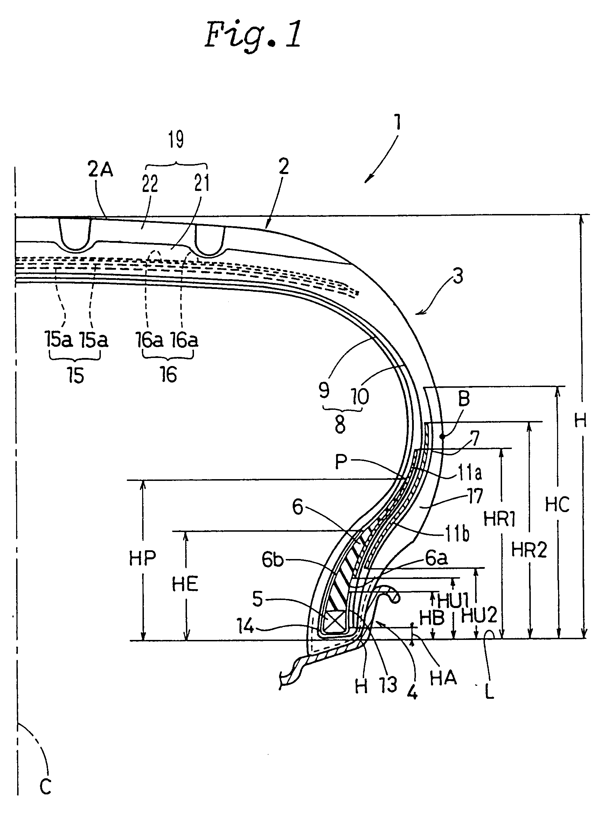

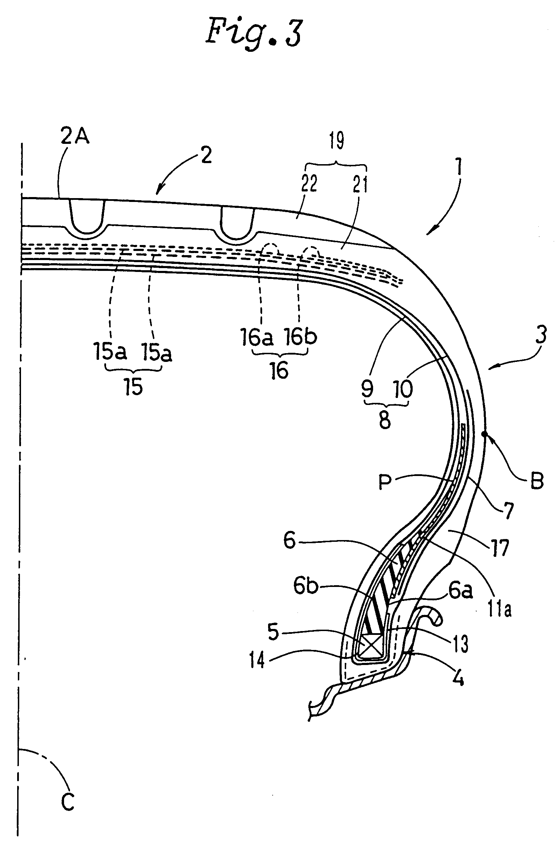

The outer carcass ply 10 extends around the tread portion 2 and sidewalls 3. The edges thereof are not turned up around the bead core 5, but terminate within or near the bead 4. That is, the edge is located at the axially outer surface of the bead core (Figs.1-2 embodiments) or the axially outer surface 6a of the bead apex 6 (Figs.3-5 embodiments).

Each of the inner and outer carcass plies 9 and 10 is made of organic fibre cords arranged radially of the tyre at an angle of from 80 to 90 degrees with respect to the tyre equator C so as to provide a radial carcass ply structure.

For the carcass cords, nylon, polyester, rayon, aromatic polyamide or the like can be used, but preferably polyester fibre cords, for example 1500d/2, are used.

The belt comprises a radially inner breaker belt 15 and a radially outer bandage belt 16.

The breaker belt 15 comprises two or more crossed plies 15a of parallel cords laid at an angle of from 15 to 85 degrees with respect to the tyre equator C.

For the breaker belt cords, organic fibre cords, e.g. nylon, rayon, aromatic polyamide or the like may be used, but steel cords are preferably used.

The bandage belt 16 comprises at least one full width bandage ply 16a made of cords spirally wound at a zero or a small angle with respect to the tyre circumferential direction.

For the bandage belt cords, organic fibre cords, e.g. nylon, aromatic polyamide fibre or the like can be used, but nylon fibre cords are preferably used.

To facilitate the making of the spiral bandage belt 16, a narrow width strip or ribbon of rubber in which several belt cords are embedded is spirally wound on the breaker belt 15.

In each of the beads 4, a bead apex 6 is disposed between the turned up portion 7 and the main portion of the inner carcass ply 9. Each bead apex 6 extends radially outwardly taperingly from the radially outer side of the bead core 5. Each bead apex 6 is made of a hard rubber compound which is harder than the sidewall rubber 17 of the sidewalls 3.

The JIS A hardness of the bead apex 6 is preferably in the range of from 80 to 95 degrees.

The JIS A hardness of the sidewall rubber 17 is preferably in the range of from 50 to 60 degrees.

Further, in each of the beads 4, an organic cord protector layer 14 is disposed. The organic cord protector layer 14 is made of parallel organic fibre cords laid at an angle of 35 to 45 degrees with respect to the tyre equator. For those organic cords, nylon fibre cords, aromatic polyamide fibre cords or the like can be used, but nylon fibre cords are preferably used.

The organic cord protector layer 14 has its main portion interposed between the axially outer surface of the main portion of the inner carcass ply 9 and the axially inner surface 6b of the bead apex 6, and a turned up portion 13 turned up around the bead core 5 from the inside to outside of the tyre.

The turned up portion 13 extends along the axially outer surface of the bead core 5 and the axially outer surface 6a of the bead apex 6 so as to wrap the bead core 5 and a radially inner part of the bead apex therein.

In each of the sidewalls 3, at least one steel cord reinforcing layer (11a, 11b, 11c, generically 11) made of parallel steel cords is positioned adjacent to at least one of the outer carcass ply 10 and the carcass turned up portion 7.

The radially outer edge of the steel cord reinforcing layer 11 is located radially outward of the radially outer edge P of the bead apex 6, but radially inwards of the radially outer edge of the turned up portion 7 of the inner carcass ply 9.

The radially inner edge of the steel cord reinforcing layer 11 is located radially outwards of the radially inner part of the bead core 5, and is preferably 3 to 7 mm radially outwards of the radially outer part of the bead core 5.

Fig.1 shows an embodiment of the present invention, in which the radially inner edge of the outer carcass ply 10 is terminated at the axially outer surface of the bead core.

In this embodiment, two steel cord reinforcing layers 11a and 11b are disposed in each sidewall portions 4. One is the axially inner layer 11a disposed between the bead apex 6 and the outer carcass ply 10, and the other is the axially outer layer 11b disposed between the outer carcass ply 10 and the turned up portion 7 of the inner carcass ply 9.

The axially outer layer 11b directly contacts both the turned up portion 7 of the inner carcass ply 9 and the outer carcass ply 10 over all its length. On the other hand, the radially outer edge portion of the axially inner layer 11a directly contacts with both the main portion of the inner carcass ply 9 and the outer carcass ply 10.

The radially outer edge of the axially outer layer 11b is located radially outwards of the radially outer edge of the axially inner layer 11a.

The radial height HR1 of the radially outer edge of the axially inner layer 11a is in the range of from 0.35 to 0.5 times the tyre section height H, each measured from the bead base line L.

The radial height HR2 of the radially outer edge of the axially outer layer 11b is in the range of from 0.4 to 0.6 times the tyre height H. If the height HR1 or HR2 is greater than the above-mentioned range, the ride comfort is poor. If the height HR1 or HR2 is less than the above-mentioned range, it becomes too difficult to increase the bead rigidity.

On the other hand, the radially inner edge of the axially inner layer 11a is located radially outwards of the radially outer edge of the bead core 5, preferably by 3 to 7 mm. The radially inner edge of the axially outer layer 11b is located radially outward of the radially inner edge of the axially inner layer 11a.

Therefore, the sidewall and the bead are effectively reinforced to improve steering stability. However, due to the existence of such rigid layers 11, the bending stress when loaded is liable to be concentrated on the edges of the layers. Therefore, to avoid such a concentration, the following relationship is satisfied:$\text{HA < HB < HU1 < HU2 < HE < HP < HR1 < HR2 < HC}$ wherein
HC is the height of the radially outer edge of the turned up portion 7 of the inner carcass ply 9;
HR2 is the height of the radially outer edge of the axially outer steel cord reinforcing layer 11b;,
HR1 is the height of the radially outer edge of the axially inner steel cord reinforcing layer 11a;
HP is the height of the radially outer edge P of the bead apex 6;
HE is the height of the radially outer edge of the main portion of the organic cord protector layer 14;
HU2 is the height of the radially inner edge of the axially outer steel cord reinforcing layer 11b;
HU1 is the height of the radially inner edge of the axially inner steel cord reinforcing layer 11a;
HB is the height of the radially outer edge of the turned up portion 13 of the organic cord protector layer 14;
HA is the height of the radially inner edge of the outer carcass ply 10;
each being height measured from the bead base line L, whereby the bending rigidity is gradually decreased from the bead base to the sidewall middle part to widely disperse the bending stress, and as a result durability is effectively improved.

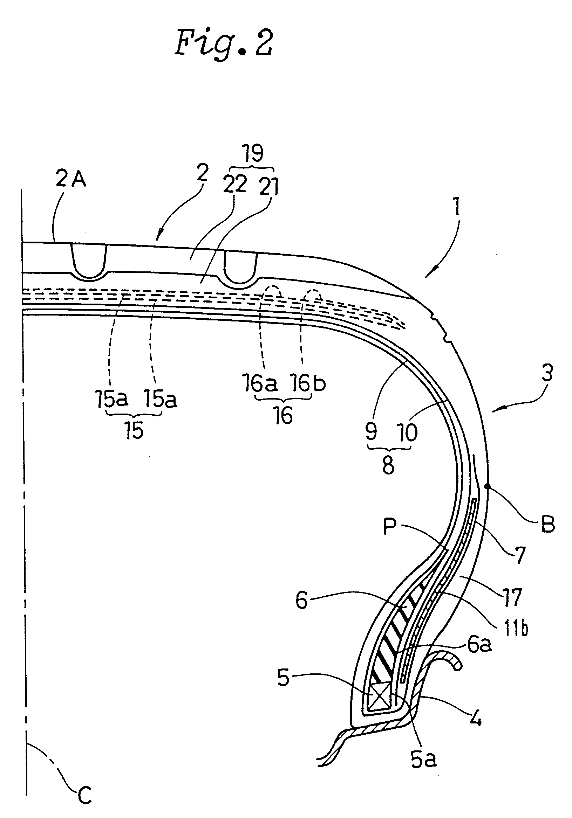

Fig.2 shows another embodiment of the present invention, which is a modification of the embodiment of Fig.1.

In this embodiment, the above mentioned axially inner reinforcing layer 11a is omitted. Therefore, in each of the sidewalls 4, the reinforcing layer 11b is disposed only between the turned up portion 7 and the outer carcass ply 10.

The radial height of the radially outer edge of the layer 11b is in the range of from 0.4 to 0.6 times the tyre height. In this example, the radially outer edge is slightly radially inwards of the maximum tyre width point B.

The radially inner edge of the layer 11b is located at almost the same height as the radially outer part of the bead core 5.

The outer carcass ply 10 is terminated radially inward of the radially outer part of the bead core 5, in this example near the bead base.

Therefore, the outer carcass ply 10 directly contacts the axially outer surface 6a of the bead apex 6 and the axially outer side 5a of the bead core 5.

The radially outer-most bandage ply 16b is not a full width band 16a as shown in Fig.1, but a so called edge bandage which consists of axially spaced narrow width pieces disposed in each shoulder portion.

In this embodiment, the organic cord protector layer 14 is also omitted.

Fig.3 shows another embodiment of the present invention, which is another modification of the embodiment of Fig.1.

In this embodiment, the radially inner edge of the outer carcass ply 10 is terminated at the axially outer surface 6a of the bead apex 6, and the above mentioned axially outer reinforcing layer 11b is omitted. Therefore, in each of the sidewalls 4, the reinforcing layer 11a is disposed only between the bead apex 6 and the outer carcass ply 10.

Therefore, the turned up portion 7 directly contacts the outer carcass ply 10. Further, the radially outer edge portion of the reinforcing layer 11a directly contacts both the main portion of the inner carcass ply 9 and the outer carcass ply 10.

The radial height of the radially outer edge of the layer 11a is in the range of from 0.4 to 0.6 times the tyre height. In this example, the radially outer edge is radially outwards of the maximum tyre width point B.

The radially inner edge of the layer 11a is located radially outwards of the radially outer part of the bead core 5.

The outer carcass ply 10 is terminated at almost the same height as the radially inner edge of the reinforcing layer 11a, that is, radially outwards of the radially outer side of the bead core 5.

Similarly to the embodiment of Fig.2, the radially outer most band ply 16b is an edge bandage consisting of axially spaced narrow width pieces.

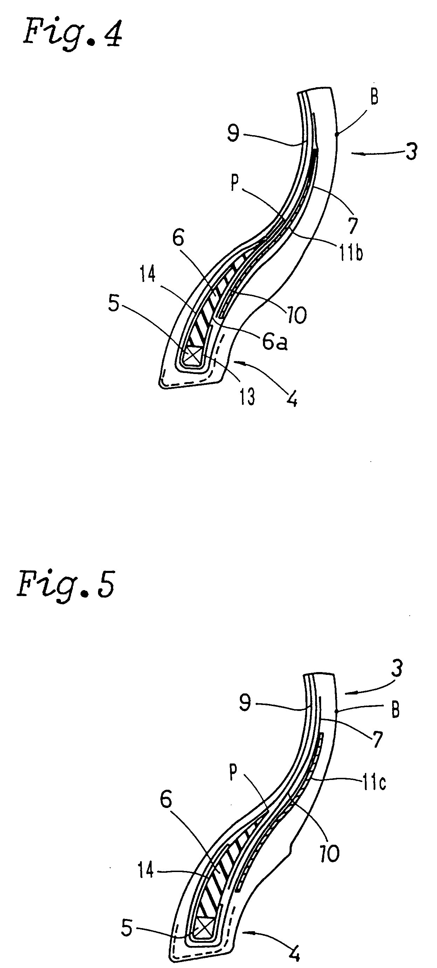

Fig.4 shows another embodiment of the present invention, which is a modification of the embodiment of Fig.3. In this embodiment, only the axially outer reinforcing layer 11b is provided instead of the axially inner reinforcing layer 11a.

Fig.5 shows still another embodiment of the present invention, wherein, in each of the sidewalls 3, only one steel cord reinforcing layer 11c is disposed axially outwards of the turned up portion 7 of the inner carcass ply 9.

The radial height of the radially outer edge of the layer 11c is in the range of from 0.4 to 0.6 times the tyre height. In this example, the radially outer edge is slightly radially inwards of the maximum tyre width point B.

The radially inner edge of the layer 11c is located radially outwards of the radially outer edge of the bead core 5.

The outer carcass ply 10 is terminated at almost the same height as the radially inner edge of the reinforcing layer 11c, that is, radially outwards of the radially outer edge of the bead core 5.

As explained above, in the pneumatic tyres of the present invention, the inner and outer carcass plies form a shell-like structure inside which the hard rubber bead apex is positioned. Therefore, the lateral, longitudinal and torsional rigidity of the tyre is effectively increased to improve the handling, but the force variations are not increased. Further, the carcass weight is decreased, and manufacturing is easy.

## Claims

1. A pneumatic tyre comprising a tread portion (2), a pair of axially spaced beads (4) each with a bead core (5) therein, a pair of sidewalls (3) extending therebetween, a carcass (8) having an inner carcass ply (9) and an outer carcass ply (10), and a bead apex (6) made of hard rubber disposed in each bead (4), said inner carcass ply (9) extending between the beads (4) and having a pair of edges turned up around the bead cores from the axially inside to outside of the tyre to define two turned up portions (7) and one main portion therebetween, each said turned up portion (7) extending radially outwardly from the bead portion over the maximum tyre width point (B), said bead apex (6) disposed between the main portion and each said turned up portion (7) and tapering radially outwardly from the bead core (5), characterised by the outer carcass ply (10) having a pair of edges each disposed between the bead apex (6) and each said turned up portion (7), and the edges of the outer carcass ply (10) being terminated radially outwards of the radially inner side of the bead core (5).

2. A pneumatic tyre according to claim 1, characterised in that the edges of the outer carcass ply are terminated radially outwards of the radially outer end of the bead core.

3. A pneumatic tyre according to claim 1 or 2, characterised in that the bead apex (6) is made of a hard rubber compound having a JIS A hardness of from 80 to 95 degrees.

4. A pneumatic tyre according to claim 1, 2 or 3, characterised in that each said bead (4) is provided with an organic cord protector layer (14), said organic cord protector layer (14) comprising a main portion interposed between the axially outer surface of the main portion of the inner carcass ply (9) and the axially inner surface (6b) of the bead apex (6), and a turned up portion (13) turned up around the bead core (4) from the inside to the outside of the tyre, and said turned up portion (13) extends along the axially outer surface of the bead core (5) and the axially outer surface (6a) of the bead apex (6) so as to wrap the bead core (5) and a radially inner part of the bead apex (6) therein.

5. A pneumatic tyre according to claim 1, 2, 3 or 4, characterised in that each sidewall (3) is provided with a steel cord reinforcing layer (11a, 11b) made of parallel steel cords, said steel cord reinforcing layer being disposed between the bead apex (6) and the turned up portion (7) of the inner carcass ply (9).

6. A pneumatic tyre according to claim 5, characterised in that said steel cord reinforcing layer (11a) is disposed between the outer carcass ply (10) and the bead apex (6).

7. A pneumatic tyre according to claim 5, characterised in that said steel cord reinforcing layer (11b) is disposed between the outer carcass ply (10) and the turned up portion (7).

8. A pneumatic tyre according to claim 5, 6, or 7, characterised in that each said sidewall portion is further provided with a steel cord reinforcing layer (11a, 11b) made of parallel steel cords, one of said two steel cord reinforcing layers (11a) being disposed between the outer carcass ply (10) and the bead apex (6), the other steel cord reinforcing layer (11b) being disposed between the outer carcass ply (10) and the turned up portion (7).

9. A pneumatic tyre according to claim 1, characterised in that each said sidewall (3) is provided with a steel cord reinforcing layer (11c) made of parallel steel cords, said steel cord reinforcing layer (11c) being disposed axially outwards of the turned up portion (7).

10. A pneumatic tyre according to claim 5, 6, 7, 8 or 9, characterised in that the radially outer end of each said steel cord reinforcing layer (11a, 11b 11c) is located radially inwards of the radially outer edge of the turned up portion (7), and radially outwards of the radially outer edge (P) of the bead apex (6).

11. A pneumatic tyre according to claim 5, 6, 7, 8 or 9, characterised in that the radially inner edge of each said steel cord reinforcing layer (11a, 11b 11c) is located radially outwards of the radially outer side of the bead core (5).

## Patentansprüche

1. Ein Luftreifen mit einem Wulstteil (2), einem Paar axial beabstandete Wülste (4), jeweils mit einem Wulstkern (5) darin, einem Paar Seitenwände (3), die sich dazwischen erstrecken, einer Karkasse (8) mit einer inneren Karkassenlage (9) und einer äußeren Karkassenlage (10), und einem Wulstkernreiter (6), der aus Hartgummi hergestellt und in jedem Wulst (4) angeordnet ist, wobei die innere Karkassenlage (9) sich zwischen den Wülsten (4) erstreckt und ein Paar Kanten aufweist, die um die Wulstkerne von der axialen Innenseite zur Außenseite des Reifens umgeschlagen sind, um zwei Umschlagteile (7) und einen Hauptteil dazwischen zu definieren, jeder Umschlagteil (7) sich radial nach außen von dem Wulstteil über den Punkt (B) maximaler Reifenbreite erstreckt, und der Wulstkernreiter (6) zwischen dem Hauptteil und jedem Umschlagteil (7) angeordnet ist und sich radial nach außen von dem Wulstkern (5) verjüngt,
dadurch gekennzeichnet,
daß die äußere Karkassenlage (10) ein Paar Kanten aufweist, die jeweils zwischen dem Wulstkernreiter (6) und jedem Umschlagteil (7) angeordnet sind, und die Kanten der äußeren Karkassenlage (10) radial außerhalb der radial inneren Seite des Wulstkerns (5) enden.

2. Ein Luftreifen nach Anspruch 1,
dadurch gekennzeichnet, daß die Kanten der äußeren Karkassenlage radial außerhalb von dem radial äußeren Ende des Wulstkerns enden.

3. Ein Luftreifen nach Anspruch 1 oder 2,
dadurch gekennzeichnet, daß der Wulstkernreiter (6) aus einem Hartgummiverbund mit einer JIS-A-Härte von 80 bis 95 Grad hergestellt ist.

4. Ein Luftreifen nach Anspruch 1, 2 oder 3,
dadurch gekennzeichnet, daß jeder Wulst (4) mit einer Schutzschicht (14) aus organischem Cord versehen ist, wobei die Schutzschicht (14) aus organischem Cord einen Hauptteil, der zwischen die axial äußeren Oberfläche des Hauptteils der inneren Karkassenlage (9) und die axial inneren Oberfläche (6b) des Wulstkernreiters (6) gesetzt ist, und einen Umschlagteil (13) umfaßt, der um den Wulstkern (4) von der Innenseite zur Außenseite des Reifens umgeschlagen ist, und der Umschlagteil (13) sich entlang der axial äußeren Oberfläche des Wulstkerns (5) und der axial äußeren Oberfläche (6a) des Wulstkernreiters (6) erstreckt, so daß der Wulstkern (5) und ein radial innerer Teil des Wulstkernreiters (6) darin eingewickelt ist.

5. Ein Luftreifen nach Anspruch 1, 2, 3 oder 4,
dadurch gekennzeichnet, daß jede Seitenwand (3) mit einer Stahlcordverstärkungsschicht (11a, 11b) versehen ist, die aus parallelen Stahlcorden hergestellt ist, wobei die Stahlcordverstärkungsschicht zwischen dem Wulstkernreiter (6) und dem Umschlagteil (7) der inneren Karkassenlage (9) angeordnet ist.

6. Ein Luftreifen nach Anspruch 5,
dadurch gekennzeichnet, daß die Stahlcordverstärkungsschicht (11a) zwischen der äußeren Karkassenlage (10) und dem Wulstkernreiter (6) angeordnet ist.

7. Ein Luftreifen nach Anspruch 5,
dadurch gekennzeichnet, daß die Stahlcordverstärkungsschicht (11b) zwischen der äußeren Karkassenlage (10) und dem Umschlagteil (7) angeordnet ist.

8. Ein Luftreifen nach Anspruch 5, 6 oder 7,
dadurch gekennzeichnet, daß jeder Seitenwandteil weiter mit einer Stahlcordverstärkungsschicht (11a, 11b) versehen ist, die aus parallelen Stahlcorden hergestellt ist, wobei eine der zwei Stahlcordverstärkungsschichten (11a) zwischen der äußeren Karkassenlage (10) und dem Wulstkernreiter (6) angeordnet ist, und die andere Stahlcordverstärkungsschicht (11b) zwischen der äußeren Karkassenlage (10) und dem Umschlagteil (7) angeordnet ist.

9. Ein Luftreifen nach Anspruch 1,
dadurch gekennzeichnet, daß jede Seitenwand (3) mit einer Stahlcordverstärkungsschicht (11c) versehen ist, die aus parallelen Stahlcorden hergestellt ist, wobei die Stahlcordverstärkungsschicht (11c) axial außerhalb des Umschlagteils (7) angeordnet ist.

10. Ein Luftreifen nach Anspruch 5, 6, 7, 8 oder 9,
dadurch gekennzeichnet, daß das radial äußere Ende jeder Stahlcordverstärkungsschicht (11a, 11b, 11c) radial innerhalb der radial äußeren Kante des Umschlagteils (7) und radial außerhalb der radial äußeren Kante (P) des Wulstkernreiters (6) angeordnet ist.

11. Ein Luftreifen nach Anspruch 5, 6, 7, 8 oder 9,
dadurch gekennzeichnet, daß die radial innere Kante jeder Stahlcordverstärkungsschicht (11a, 11b, 11c) radial außerhalb der radial äußeren Seite des Wulstkerns (5) angeordnet ist.

## Revendications

1. Pneumatique comprenant une partie (2) de bande de roulement, deux talons (4) axialement espacés, ayant chacun une tringle (5) à l'intérieur, deux flancs (3) disposés entre les talons et la partie de bande de roulement, une carcasse (8) ayant une nappe interne (9) et une nappe externe (10), et une pointe de bourrage de talon (6) formée d'un caoutchouc dur et disposée dans chaque talon (4), la nappe interne (9) de carcasse étant disposée entre les talons (4) et ayant deux bords repliés autour des tringles de l'intérieur vers l'extérieur dans la direction axiale du pneumatique pour la délimitation de deux parties repliées (7) et d'une partie principale entre ces parties repliées, chaque partie repliée (7) étant dirigée radialement vers l'extérieur depuis la partie de talon au-delà du point (B) de largeur maximale du pneumatique, la pointe de bourrage de talon (6) étant disposée entre la partie principale et chaque partie repliée (7) et ayant une dimension qui diminue progressivement radialement vers l'extérieur depuis la tringle (5), le pneumatique étant caractérisé en ce que la nappe externe (10) de carcasse a deux bords disposés chacun entre la pointe de bourrage de talon (6) et chaque partie repliée (7), et les bords de la nappe externe (10) de carcasse se terminent radialement à l'extérieur du bord radialement interne de la tringle (5).

2. Pneumatique selon la revendication 1, caractérisé en ce que les bords de la nappe externe de carcasse se terminent radialement à l'extérieur de l'extrémité radialement externe de la tringle.

3. Pneumatique selon la revendication 1 ou 2, caractérisé en ce que la pointe de bourrage de talon (6) est formée d'une composition de caoutchouc dur ayant une dureté JIS A comprise entre 80 et 95°.

4. Pneumatique selon la revendication 1, 2 ou 3, caractérisé en ce que chaque talon (4) a une couche protectrice (14) de câblés organiques, la couche protectrice (14) comprenant une partie principale placée entre la surface axialement externe de la partie principale de la nappe interne (9) de carcasse et la surface axialement interne (6b) de la pointe de bourrage de talon (6), et une partie (13) repliée autour de la tringle (4) de l'intérieur vers l'extérieur du pneumatique, la partie repliée (13) étant placée le long de la surface axialement externe de la tringle (5) et de la surface axialement externe (6a) de la pointe de bourrage de talon (6) afin qu'elle enveloppe la tringle (5) et une partie radialement interne de la pointe de bourrage de talon (6).

5. Pneumatique selon la revendication 1, 2, 3 ou 4, caractérisé en ce que chaque flanc (3) comporte une couche d'armature (11a, 11b) formée de câblés parallèles d'acier, la couche d'armature formée de câblés d'acier étant disposée entre la pointe de bourrage de talon (6) et la partie repliée (7) de la nappe interne (9) de carcasse.

6. Pneumatique selon la revendication 5, caractérisé en ce que la couche d'armature (11a) de câblés d'acier est disposée entre la nappe externe (10) de carcasse et la pointe de bourrage de talon (6).

7. Pneumatique selon la revendication 5, caractérisé en ce que la couche d'armature (11b) de câblés d'acier est disposée entre la nappe externe (10) de carcasse et la partie repliée (7).

8. Pneumatique selon la revendication 5, 6 ou 7, caractérisé en ce que chaque partie de flanc comporte en outre une couche d'armature (11a, 11b) formée de câblés parallèles d'acier, l'une des deux couches d'armature (11a) de câblés d'acier étant placée entre la nappe externe (10) de carcasse et la pointe de bourrage de talon (6), l'autre couche d'armature (11b) de câblés d'acier étant disposée entre la nappe externe (10) de carcasse et la partie repliée (7).

9. Pneumatique selon la revendication 1, caractérisé en ce que chaque flanc (3) comporte une couche d'armature (11c) formée de câblés parallèles d'acier, cette couche d'armature (11c) formée de câblés d'acier étant placée axialement à l'extérieur de la partie repliée (7).

10. Pneumatique selon la revendication 5, 6, 7, 8 ou 9, caractérisé en ce que l'extrémité radialement externe de chaque couche d'armature (11a, 11b, 11c) de câblés d'acier est placée radialement à l'intérieur du bord radialement externe de la partie repliée (7) et radialement à l'extérieur du bord radialement externe (P) de la pointe de bourrage de talon (6).

11. Pneumatique selon la revendication 5, 6, 7, 8 ou 9, caractérisé en ce que le bord radialement interne de chaque couche d'armature (11a, 11b, 11c) de câblés d'acier est disposé radialement à l'extérieur du côté radialement externe de la tringle (5).
